## Europäisches Patentamt

## European Patent Office

## Office européen des brevets

(11) Veröffentlichungsnummer: **0 428 761 A1**

# (12) EUROPÄISCHE PATENTANMELDUNG

(21) Anmeldenummer: 89121289.6

(51) Int. Cl.5: **B29C 45/17**

(22) Anmeldetag: 17.11.89

(43) Veröffentlichungstag der Anmeldung:
**29.05.91 Patentblatt 91/22**

(84) Benannte Vertragsstaaten:
**AT BE CH DE ES FR GB GR IT LI LU NL SE**

(71) Anmelder: **Battenfeld Kunststoffmaschinen Ges.m.b.H.**
**Wiener-Neustädter-Strasse 81**
**AT-2542 Kottingbrunn(AT)**

(72) Erfinder: **Heindl, Friedrich**

**Dörflergasse 43**
**A-2500 Baden(AT)**
Erfinder: **Huber, Anton, Dipl.-Ing.,**
**Josef-Moc-Gasse 14**
**A-2560 Berndorf(AT)**

(74) Vertreter: **Müller, Gerd**
**Patentanwälte**
**HEMMERICH-MÜLLER-GROSSE-POLLMEIER--**
**MEY-VALENTIN Hammerstrasse 2**
**W-5900 Siegen 1(DE)**

(54) **Schliessvorrichtung für Formen zum Herstellen von Gegenständen aus Kunststoff.**

(57) Es wird eine Schließvorrichtung 1 für Formen zum Herstellen von Gegenständen aus Kunststoff, insbesondere in Spritzgieß-oder Blasformmaschinen, beschrieben, die mit einem ortsfesten Formträger 3 und einem bewegbaren Formträger 7 sowie mit einer den Träger für den Schließantrieb 6 bildenden, ortsfesten Montageplatte 4 ausgestattet ist. Der ortsfeste Formträger 3 und die ortsfeste Montageplatte 4 ruhen dabei auf einem gemeinsamen Maschinenfuß bzw. -rahmen 2 und sind auf Abstand voneinander durch zumindest auf Zug belastbare Holme 5 verbunden. Der mit dem Schließantrieb 6 gekuppelte, bewegbare Formträger 7 ist im Bereich zwischen dem ortsfesten Formträger 3 und der ortsfesten Montageplatte 4 geführt.

Damit die Holme 5 mit geringen Querschnittsabmessungen und ohne besondere Oberflachenqualität - also in kostengünstiger Ausführung - in Benutzung genommen werden können, wird der bewegbare Formträger 7 getrennt bzw. unabhängig von den Holmen 5 ausschließlich auf Schienen 8 des die ortsfeste Montageplatte 4 und den ortsfesten Formträger 3 tragenden Maschinenfußes bzw. -rahmens 2 abgestützt bzw. gehalten und geführt.

Schnitt II-II

Fig. 2

# SCHLIESSVORRICHTUNG FÜR FORMEN ZUM HERSTELLEN VON GEGENSTÄNDEN AUS KUNSTSTOFF

Die Erfindung bezieht sich auf eine Schließvorrichtung für Formen zum Herstellen von Gegenständen aus Kunststoff, insbesondere in Spritzgieß- oder Blasformmaschinen, mit einem ortsfesten und einem beweglichen Formträger sowie mit einer den Träger für den Schließantrieb bildenden, ortsfesten Montageplatte, wobei der ortsfeste Formträger und die ortsfeste Montageplatte auf einem gemeinsamen Maschinenfuß bzw. -rahmen ruhen und auf Abstand voneinander durch auf Zug belastbare Holme miteinander verbunden sind, während der mit dem Schließantrieb gekuppelte, bewegliche Formträger im Bereich zwischen dem ortsfesten Formträger und der ortsfesten Montageplatte geführt ist.

Schließvorrichtungen dieser Gattung sind bereits bekannt und stehen als Formenschließeinheit bzw. Formschließsystem in weit verbreitetem, praktischem Einsatz. Dabei sind die Formenschließeinheiten bzw. Formschließsysteme so aufgebaut, daß die den ortsfesten Formträger und die ortsfeste Montageplatte auf Abstand miteinander verbindenden - in der Regel vier - Holme sowohl die Tragfunktion als auch die Führungsfunktion für den mit dem Schließantrieb gekuppelten, beweglichen Formträger bilden.

Da die freie Baulänge der Holme durch den freien Abstand zwischen dem ortsfesten Formträger und der ortsfesten Montageplatte bestimmt wird und dieser wiederum von der maximalen Baulänge des zwischen dem ortsfesten Formträger und dem beweglichen Formträger einzubauenden Werkzeuges zuzüglich des hierfür notwendigen maximalen Öffnungs- und Schließweges bestimmt wird, müssen die Holme einen beträchtlichen Querschnitt erhalten, wenn ihre Durchbiegung unter dem Gewicht des beweglichen Formträgers und der daran befindlichen Formhälfte gering gehalten werden soll.

Außerdem ist es notwendig, daß diese Holme mit einer hohen Oberflächengüte zur Verfügung gestellt werden, weil sie -mit Hilfe von zugeordneten Büchsen - zur exakten Führung des beweglichen Formträgers dienen bzw. bei anderen Konstruktionen eine Dichtfunktion zu übernehmen haben.

Durch die DE-OS 30 06 230 und die DE-OS 30 29 597 sind zwar für gattungsgemäße Schließvorrichtungen bereits Abstützvorrichtungen für den mittels Büchsen auf den Holmen horizontal bewegbaren Formträger bekanntgeworden, die mit auf Schienen längs des Maschinenfußes bzw. -rahmens beweglichen Gleitschuhen arbeiten.

In diesem Falle sind jedoch die Gleitschuhe dem bewegbaren Formträger lediglich im unmittelbaren Anschluß an die Befestigungsebene für die bewegliche Formhälfte zugeordnet, so daß sie im wesentlichen nur das Gewicht des beweglichen Formträgers und der daran befestigten Formhälfte abfangen können, die Holme der Formenschließeinheit bzw. des Formschließsystems aber nach wie vor die Führungsfunktion für den bewegbaren Formträger und die daran befestigte Formhälfte voll übernehmen müssen. Die Folge hiervon ist, daß zwar gegebenenfalls die Querschnittsabmessungen für die Holme im gewissen Umfang vermindert werden können, daß sie aber nach wie vor eine hohe Oberflächenqualität zur Erfüllung ihrer Führungsfunktion aufweisen müssen.

Ziel der Erfindung ist es, eine Formenschließeinheit bzw. ein Formschließsystem gattungsgemäßer Art anzugeben, die so ausgelegt ist, daß von den die ortsfeste Montageplatte für den Schließantrieb und den ortsfesten Formträger miteinander verbindenden Holmen lediglich noch die Schließund Zuhaltekräfte für das Formwerkzeug, also die Spritzgieß-oder Blasform, aufzunehmen ist.

Gelöst wird diese Aufgabe erfindungsgemäß dadurch, daß der bewegliche Formträger getrennt, bzw. unabhängig von den Holmen ausschließlich auf Schienen des - die ortsfeste Montageplatte und den ortsfesten Formträger tragenden - Maschinenfußes bzw. -rahmens abgestützt bzw. gehalten und geführt ist.

Diese konsequente Trennung des bewegbaren Formträgers von den Holmen macht es in vorteilhafter Weise möglich, letztere gänzlich von ihrer Trag- bzw. Führungsposition zu entbinden, so daß sie in ihrer Bemessung nur auf die im wesentlichen in ihrer Axialrichtung wirkenden Schließ- und Zuhaltekräfte dimensioniert werden müssen und darüber hinaus keine hohe Oberflächengüte aufzuweisen brauchen.

Da der bewegbare Formträger erfindungsgemäß von den Holmen der Formschließeinheit bzw. des Formschließsystems völlig freigestellt ist, können bei der Betätigung des Schließantriebs keinerlei Biegekräfte auf deren bzw. dessen Holme zurückwirken.

In weiterer Ausgestaltung der Erfindung ist vorgesehen, daß die Schienen und der bewegliche Formträger über Prismenführungen in Eingriff stehen, die eine einfache und trotzdem funktionssichere Wirkverbindung des beweglichen Formträgers mit den übrigen Funktionsteilen der Formenschließeinheit bzw. des Formschließsystems gewährleisten.

Als besonders wichtig hat sich eine Ausbildung herausgestellt, bei der der Formträger auf Schlitten ruht, deren wirksame Länge mindestens annähernd seiner eigenen Baulänge entspricht. Es kann sich dabei um einen einzigen Schlitten handeln, der sich ununterbrochen über die gesamte Wirklänge erstreckt, der mit sämtlichen Schienen des Maschinenfußes bzw. -rahmens in Eingriff steht. Es können jedoch auch mehrere hinter- und nebeneinander liegende Schlitten dem bewegbaren Formträger zugeordnet werden, die dann unabhängig voneinander mit den Schienen des Maschinenfußes bzw. -rahmens zusammenwirken.

Die Zeichnung veranschaulicht ein Ausführungsbeispiel des Gegenstandes der Erfindung, welches nachfolgend beschrieben wird. Es zeigen

Figur 1 in teilweisem Längsschnitt eine Formenschließeinheit,

Figur 2 die Formenschließeinheit nach Fig. 1 im Schnitt entlang der Linie II-II und

Figur 3 in größerem Maßstab den in Fig. 2 mit A gkennzeichneten Ausschnittbereich einer Prismenführung.

Es ist eine für die Zusammenarbeit mit einer Spritzgieß-oder auch einer Blasformmaschine ausgelegte Formenschließeinheit 1 dargestellt, die auf einem Maschinenfuß oder -rahmen 2 ruht, welcher Teil der Spritzgieß-bzw. Blasformmaschine sein kann. Dabei weist die Formenschließeinheit 1 einen ortsfesten Formträger 3 und eine ortsfeste Montageplatte 4 auf, die jeweils auf dem Maschinenfuß bzw. -rahmen 2 ruhen und auch verankert sind.

Untereinander stehen der ortsfeste Formträger 3 und die ortsfeste Montageplatte 4 durch mehrere, bspw. vier, horizontale Holme 5 in ständiger Verbindung, und zwar so, daß diese Holme 5 zumindest axiale Kräfte, vornehmlich Zugkräfte, aufzunehmen in der Lage sind.

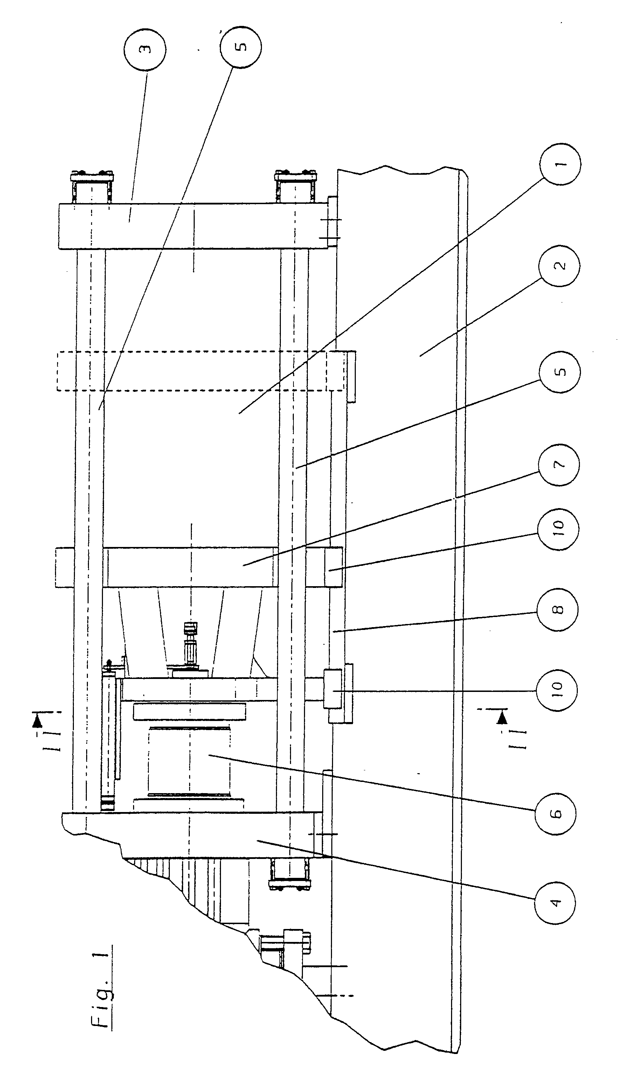

An und/oder in der ortsfesten Montageplatte 4 der Formenschließeinheit 1 ist der Schließantrieb 6 angeordnet, welcher wiederum am bewegbaren Formträger 7 angreift, wie das deutlich in Fig. 1 der Zeichnung zu sehen ist. Vorzugsweise ist dabei der Schließantrieb 6 als hydraulische Kolben-Zylinder-Einheit ausgelegt.

Ein Wesensmerkmal der Formenschließeinheit 1 liegt darin, daß der bewegbare Formträger 7 völlig getrennt bzw. unabhängig von den Holmen 5 der Formenschließeinheit 1, nämlich ausschließlich auf Schienen 8 abgestützt bzw. gehalten und geführt ist. Diese Schienen 8 sind dabei Teil des Maschinenfußes bzw. -rahmens 2, auf welchem wiederum die ortsfeste Montageplatte 4 und der ortsfeste Formträger 3 der Formenschließeinheit 1 ruhen.

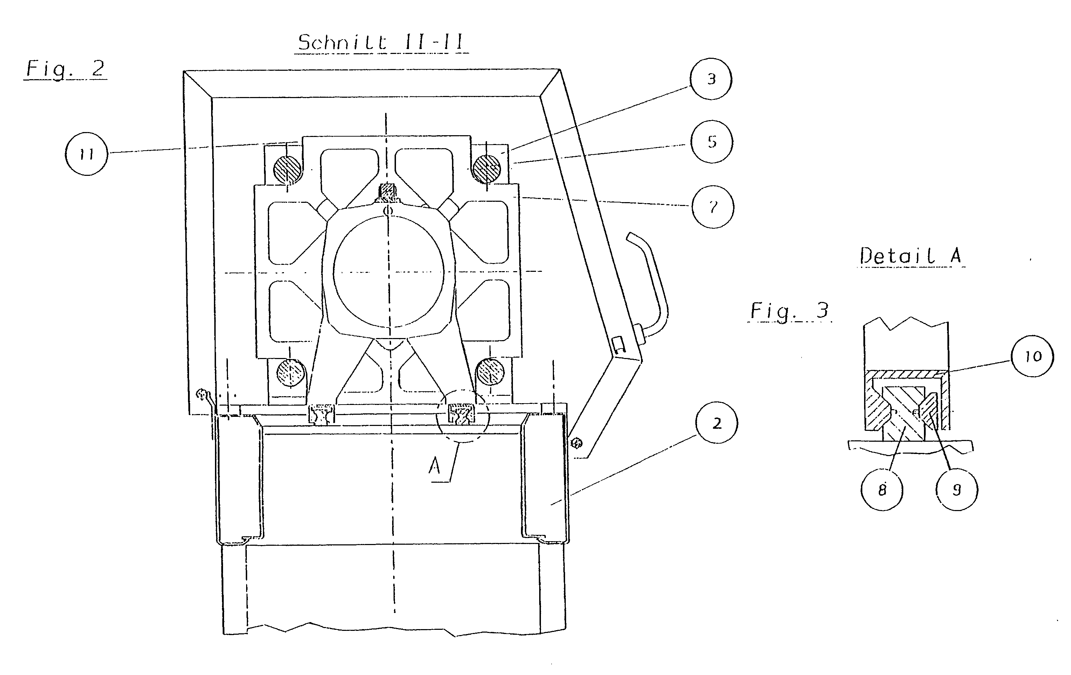

Wie dabei insbesondere aus Fig. 3 der Zeichnung hervorgeht, steht der bewegliche Formträger 7 bspw. über Prismenführungen 9 mit den Schienen 8 in Formschlußeingriff. Die Prismen führungen 9 des bewegbaren Formträgers 7 sind dabei in Schlitten 10 ausgebildet, deren wirksame Länge mindestens annähernd der jeweiligen Gesamt-Baulänge des bewegbaren Formträgers 7 entspricht, wie das in Fig. 1 der Zeichnung angedeutet ist.

Es besteht die Möglichkeit, den bewegbaren Formträger 7 mit einem einzigen Schlitten 10 auszustatten, der mit sämtlichen Schienen 8 des Maschinenfußes bzw. -rahmens 2 über seine Prismenführungen 9 gleichzeitig über die gesamte Baulänge des bewegbaren Formträgers 7 in Formschluß eingriff steht.

Andererseits kann jedoch der bewegbare Formträger 7 auch auf mehreren über seine Baulänge und -breite verteilt angeordneten Schlitten 10 ruhen, von denen dann jeder für sich mit einer der Schienen 8 in Stütz-, Halte- und Führungsverbindung steht.

Da beim Betätigen des Schließantriebs 6 sämtliche aus der Abstützung bzw. Halterung und Führung des bewegbaren Formträgers 7 resultierenden Kraftwirkungen über die Prismenführungen 9 zwischen den Schienen 8 und den Schlitten 10 in den Maschinenfuß bzw. -rahmen 2 eingehen, kann die Konstruktion des bewegbaren Formträgers 7 völlig von den vier Holmen 5 der Formenschließeinheit 1 freigestellt werden. Dies kann bspw. dadurch geschehen, daß der bewegbare Formträger 7 im Durchführungsbereich für jeden einzelnen Holm 5 mit einem Eckausschnitt 11 versehen wird, so daß er eine im wesentlichen kreuzförmige Umrißform erhält, wie sie in Figur 2 der Zeichnung deutlich zu sehen ist. Auch einfache Durchgangslöcher in diesem Bereich, welche die Holme 5 jeweils mit beträchtlichem Radialspiel umgeben, können aber den gleichen Zweck erfüllen.

## Ansprüche

1. Schließvorrichtung für Formen zum Herstellen von Gegenständen aus Kunststoff, insbesondere in Spritzgieß- oder Blasformmaschinen, mit einem ortsfesten und einem beweglichen Formträger sowie mit einer den Träger für den Schließantrieb bildenden, ortsfesten Montageplatte, wobei der ortsfeste Formträger und die ortsfeste Montageplatte auf einem gemeinsamen Maschinenfuß-bzw. -rahmen ruhen und auf Abstand voneinander durch zumindest auf Zug belastbare Holme miteinander verbunden sind, während der mit dem Schließantrieb gekuppelte, bewegliche Formträger im Bereich zwischen dem ortsfesten Formträger und der ortsfesten Montageplatte geführt ist, **dadurch gekennzeichnet,** daß der bewegliche Formträger (7) getrennt bzw. unabhängig von den Holmen (5) ausschließlich auf Schienen (8) des - die ortsfeste Montageplatte (4) und den ortsfesten Formträger (3) tragenden - Maschinenfußes-bzw. -rahmens (2) abgestützt bzw.

gehalten und geführt ist (9, 10).

2. Schließvorrichtung nach Anspruch 1,
**dadurch gekennzeichnet,**
daß die Schienen (8) und der bewegbare Formträger (7) über Linearführungen, z.B. Prismenführungen (9) miteinander in Eingriff stehen.

3. Schließvorrichtung nach einem der Ansprüche 1 und 2,
**dadurch gekennzeichnet,**
daß der bewegbare Formträger (7) auf Schlitten (10) ruht, deren wirksame Länge mindestens annähernd seiner Baulänge entspricht.

Fig. 1

EP 0 428 761 A1

Fig. 3

Detail A

Fig. 2

Schnitt II-II

Europäisches
Patentamt

# EUROPÄISCHER RECHERCHENBERICHT

Nummer der Anmeldung

EP 89 12 1289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 310 807 (MITSUBISHI JUKOGYO K.K.) * Spalte 1, Zeile 15 - Spalte 2, Zeile 11; Spalte 5, Zeile 31 - Spalte 6, Zeile 16; Spalte 10, Zeilen 2-16; Spalte 9, Zeilen 36-42; Spalte 13, Zeilen 8-14; Figuren 1,2,4,6,9,11,13,16,17 * | 1-3 | B 29 C 45/17 |
| X | DE-A-3 140 740 (HEHL) * Seite 9, Zeile 10 - Seite 10, Zeile 28; Seite 14, Zeilen 26-30; Figuren 1-5 * | 1,2 | |

RECHERCHIERTE SACHGEBIETE (Int. Cl.5)

B 29 C

Der vorliegende Recherchenbericht wurde für alle Patentansprüche erstellt

| Recherchenort | Abschlußdatum der Recherche | Prüfer |
|---|---|---|
| DEN HAAG | 18-07-1990 | MATHEY X.C.M. |